# EUROPÄISCHE PATENTSCHRIFT

(11) **EP 3 924 665 B1**
(45) Veröffentlichungstag und Bekanntmachung des Hinweises auf die Patenterteilung: **22.04.2026**
(21) Anmeldenummer: 20706139.1
(22) Anmeldetag: 11.02.2020
(51) Int. Cl.: F21V 8/00, B60Q 3/217, B60Q 3/64

(54) **FAHRZEUGINTERIEUR-BELEUCHTUNGSVORRICHTUNG**
VEHICLE INTERIOR LIGHTING APPARATUS
DISPOSITIF D'ÉCLAIRAGE D'INTÉRIEUR DE VÉHICULE

(30) Priorität: 15.02.2019 DE 102019103855
(43) Veröffentlichungstag der Anmeldung: 22.12.2021
(73) Patentinhaber: Lisa Dräxlmaier GmbH, 84137 Vilsbiburg (DE)
(72) Erfinder: KIERMAIER, Josef, 84339 Unterdietfurt (DE); ZAVIYALOV, Alexandr, 84036 Landshut (DE)
(86) Internationale Anmeldenummer: PCT/EP2020/053470
(87) Internationale Veröffentlichungsnummer: WO 2020/165168

(56) Entgegenhaltungen:
- EP-A1- 2 980 469
- US-A1- 2014 140 091

## Beschreibung

### Technisches Gebiet

Die vorliegende Erfindung betrifft eine Fahrzeuginterieur-Beleuchtungsvorrichtung, aufweisend einen länglichen Lichtleiter mit mindestens einer stirnseitigen Lichteinkopplungsfläche, einer längsseitigen Lichtumlenkfläche und einer der Lichtumlenkfläche gegenüberliegenden längsseitigen Lichtauskopplungsfläche sowie mindestens eine Lichtquelle, deren Licht an der mindestens einen Lichteinkopplungsfläche in den Lichtleiter einkoppelbar ist und mittels Lichtumlenkung an der Lichtumlenkfläche an der Lichtauskopplungsfläche aus dem Lichtleiter auskoppelbar ist. Die Erfindung betrifft auch ein Fahrzeug mit mindestens einer solchen Fahrzeuginterieur-Beleuchtungsvorrichtung. Die Fahrzeuginterieur-Beleuchtungsvorrichtung ist besonders vorteilhaft zur Türbeleuchtung einsetzbar.

### Stand der Technik

EP 2 500 753 A1 offenbart einen Lichtleiter, der ein Licht längs einer Hauptausbreitungsrichtung leitendes Volumen aufweist und der wenigstens **ein eine** Grenzfläche aufweisendes Auskoppelelement aufweist, das Licht durch eine interne Totalreflexion an seiner **Grenzfläche** unter einem Winkel auf eine Lichtaustrittsfläche umlenkt, unter dem es dort aus dem Lichtleiter austritt. Der Lichtleiter zeichnet sich dadurch aus, dass das Auskoppelelement quer zu der Hauptausbreitungsrichtung aus einer Seite des Licht leitenden Volumens herausragt und dass die Lichtaustrittsfläche einen Teil der Grenzfläche des Auskoppelelements bildet.

DE 10 2009 012 224 A1 offenbart eine Lichtleitvorrichtung, die geeignet zur Verwendung im Kraftfahrzeugbeleuchtungsbereich ist, sie umfasst einen Hauptlichtleiter, der geeignet ist, zur Lichtleitung innerhalb des Lichtleiters unter Totalreflexion des Lichts und eine Vielzahl von Licht leitenden, Licht auskoppelnden Elemente, die in dem Lichtleiter angeordnet sind. Die Licht auskoppelnden Elemente bestehen aus einem massiven Körper mit einer Lichtauslassfläche. Es wird eine Lichtdurchtrittsfläche an einer Stelle bereitgestellt, an der das Licht auskoppelnde Element mit dem Hauptlichtleiter gekoppelt ist, wobei ein Pfad für Lichtstrahlen, die aufgrund von Totalreflexion direkt auf die Lichtdurchtrittsfläche auftreffen, bereitgestellt wird, der von innerhalb des Lichtleiters über die Lichtdurchtrittsfläche durch die Lichtauslassfläche zu einer Außenseite der Lichtleitvorrichtung verläuft. Ferner wird eine Kraftfahrzeugbeleuchtungsvorrichtung offenbart, die eine Lichtquelle enthält, die mit einer Lichtleitvorrichtung verbunden ist, um Licht in den Hauptlichtleiter einzukoppeln.

EP 3 210 827 A1 offenbart eine Leuchte für ein Kraftfahrzeug mit mindestens einem Leuchtmittel sowie einem flächigen Lichtleiter mit mindestens einer Lichteinkoppelfläche und wenigstens einer, davon beabstandeten, an einer ersten Flachseite des Lichtleiters vorgesehenen Lichtauskoppelfläche, wobei an einer zweiten Flachseite des Lichtleiters, die der Lichtauskoppelfläche gegenüber liegt, Auskoppelelemente angeordnet sind, an denen in dem flächigen Lichtleiter geführte Lichtstrahlen zur Lichtauskoppelfläche umgelenkt werden, so dass sie aus dem flächigen Lichtleiter austreten, wobei das Leuchtmittel mit einem stabförmigen Lichtleiter zusammenwirkt und das Licht des Leuchtmittels in den stabförmigen Lichtleiter an einer Lichteintrittsfläche des stabförmigen Lichtleiters eintritt und diesen über eine an der Umfangsfläche vorgesehene Lichtaustrittsfläche wieder verlässt, um in die Lichteinkoppelfläche des flächigen Lichtleiters eingekoppelt zu werden.

US 2018/0118104 A1 offenbart einen Lichtleiter für ein Beleuchtungsmodul, insbesondere für ein Kraftfahrzeug. Der Lichtleiter dient zum Leiten von Licht, das von einer darin befindlichen Lichtquelle ausgeht. Der Lichtleiter umfasst einen gebogenen Einlassbereich, der optisch mit der Lichtquelle gekoppelt ist, um Licht in den Lichtleiter einzuleiten. Ein Auslassabschnitt ist optisch mit dem Einlassabschnitt gekoppelt und dazu ausgelegt, das gesamte oder einen Teil des in den Lichtleiter eingekoppelten Lichtes abzustrahlen. Der Einlassabschnitt weist ein optisches Element auf, das dazu konfiguriert ist, einen Teil des Lichts abzustrahlen, das in den Einlassabschnitt eintritt.

EP 0 191 264 A2 offenbart eine Einrichtung zum Entblenden von großflächigen Leuchtmitteln für Innen- und Außenbeleuchtung. Unter Verwendung von Prismen sind dreiseitige Prismen mit einer ihrer Seitenflächen senkrecht, mit der anderen Seitenfläche waagerecht angeordnet, wobei die Seitenflächen einen Winkel von 90° bilden und die waagerechte Seitenfläche mit der Grundfläche einen Keilwinkel von 35° bis 45°, vorzugsweise 40°, bildet.

EP 2 980 469 A1 und US 2014/0140091 A1 offenbaren Fahrzeuginterieur-Beleuchtungsvorrichtungen.

### Beschreibung der Erfindung

Eine Aufgabe der Erfindung ist es daher, unter Einsatz konstruktiv möglichst einfacher Mittel eine verbesserte Möglichkeit zur gezielten Beleuchtung von bestimmten Teilbereichen eines Fahrzeuginterieurs bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Durch das mindestens eine Lichtablenkprisma wird der Vorteil erreicht, das darauf von der Lichtauskopplungsfläche einfallendes Licht, das ansonsten neben einen gewünschten Zielbereich eines Fahrzeuginterieurs (z.B. neben eine Innenseite einer Fahrzeugtür) einfallen würde, auf den Zielbereich umgelenkt werden kann. Dadurch wird eine Lichtausbeute im Zielbereich verbessert. Auch kann so weitgehend vermieden werden, dass von den ansonsten unerwünscht angestrahlten Bereichen des Fahrzeuginterieurs (z.B. Säulen) störendes Streulicht abgestrahlt wird. Durch den Sprung zwischen zwei Brechungsindizes wird eine besonders effektive Strahlumlenkung erreicht, insbesondere im Vergleich zu einem einkomponentig und einstückig in den Lichtleiter integrierten Prisma. Ein weiterer Vorteil ist, dass die Beleuchtungsvorrichtung so anordenbar ist, dass das mindestens eine Lichtablenkprisma auch im ausgeschalteten oder nicht-leuchtenden Zustand sichtbar ist und dann ein neuartiges, hochwertig anmutendes Erscheinungsbild aufweist.

Mittels der mehreren Lichtumlenkbereiche lässt sich vorteilhafterweise auf grundsätzlich bekannte Weise eine gezielte Auskopplung von Licht aus dem Lichtleiter entlang seiner Längsrichtung erreichen.

Dass das mindestens eine Lichtablenkprisma bei Betrachtung senkrecht zur Lichtauskopplungsfläche zwischen zwei benachbarten Lichtumlenkbereichen angeordnet sind, ergibt den Vorteil, dass das mindestens eine Lichtablenkprisma unter einem flachen Winkel aus dem Lichtleiter austretendes unerwünschtes Licht durch Totalreflexion entweder wieder zurück in den Lichtleiter umlenken oder es durch Totalreflexion und Brechung in einen Nutzlichtbereich lenken kann, wodurch sich eine Effizienzsteigerung ergibt. Das unter steilem Winkel aus dem Lichtleiter austretende Nutzlicht verläuft hingegen vorteilhafterweise an dem mindestens einen Lichtablenkprisma vorbei und wird durch dieses nicht beeinträchtigt, z.B. nicht gedämpft.

Dass das mindestens eine Lichtablenkprisma bei Betrachtung senkrecht zur Lichtauskopplungsfläche zwischen zwei benachbarten Lichtumlenkbereichen angeordnet sind, kann umfassen, dass das mindestens eine Lichtablenkprisma bzw. die davon eingenommene Fläche disjunkt zu den Lichtumlenkbereichen bzw. den davon eingenommenen Flächen angeordnet bzw. sich diese Flächen nicht überdecken oder überlappen. Alternativ in Ausführungsformen die nicht unter den Anspruchsgegenstand fallen, kann das mindestens eine Lichtablenkprisma bei Betrachtung senkrecht zur Lichtauskopplungsfläche einen oder beide Lichtumlenkbereiche jeweils teilweise überdecken oder überlappen, aber nicht vollständig. Es ist eine Weiterbildung, dass das mindestens eine Lichtablenkprisma einen jeweiligen Lichtumlenkbereich flächenmäßig und/oder in Längsrichtung nicht mehr als 50% überdeckt, insbesondere nicht mehr als 25% überdeckt, insbesondere nicht mehr als 10% überdeckt. Das mindestens eine Lichtablenkprisma überdeckt also bei Betrachtung senkrecht zur Lichtauskopplungsfläche des Lichtleiters die zugehörigen benachbarten Lichtumlenkbereiche nicht oder in Ausführungsformen die nicht unter den Anspruchsgegenstand fallen, nicht vollständig bzw. nur teilweise.

Die Fahrzeuginterieur-Beleuchtungsvorrichtung ist eine Beleuchtungsvorrichtung, die dazu vorgesehen ist, mindestens einen Teilbereich eines Fahrzeuginterieurs zu beleuchten. Unter einem länglichen Lichtleiter wird insbesondere ein Lichtleiter verstanden, dessen Länge merklich größerer ist als seine Höhe und/oder seine Breite. Seine in Bezug auf die Längsrichtung oder Längserstreckung endseitigen Seiten werden als Stirnseiten oder Deckflächen bezeichnet. Zumindest eine der Stirnseiten ist dazu vorgesehen, eine Lichteinkopplungsfläche dergestalt vorzusehen, dass das Licht durch sie in den Lichtleiter eingekoppelt wird. Licht kann allgemein an einer oder an beiden Stirnseiten eingekoppelt werden.

Insbesondere ist die Länge des Lichtleiters mindestens um eine Größenordnung, d.h., um mindestens den Faktor 10, größer als dessen Breite. Jedoch ist dieses Größenverhältnis zwischen Länge und Breite nicht darauf beschränkt und kann z.B. auch im Bereich von mindestens einem Faktor 2, mindestens einem Faktor 5 usw. liegen.

Eine Seite des Lichtleiters, die sich entlang seiner Längsrichtung erstreckt, und zwar insbesondere zwischen den beiden Stirnflächen, kann auch als Längsseite bezeichnet werden. Die Lichtumlenkfläche und die Lichtauskopplungsfläche entsprechen gegenüberliegenden Längsseiten oder kürzeren Teilbereichen davon.

Der Lichtleiter kann ein stabförmiger oder balkenförmiger Lichtleiter sein, der in zu seiner Längsrichtung senkrechter Höhen- und Breitenrichtung merklich kürzer ist als in Längsrichtung, insbesondere mindestens um den Faktor 10. Die kann auch als L >> H, B mit L der Länge des Lichtleiters, H der Höhe des Lichtleiters und B der Breite des Lichtleiters beschrieben werden. Lichtleiter mit einer solchen Grundform werden häufig auch als Stablichtleiter bezeichnet. Höhe H und die Breite B des Lichtleiters können eine gleiche oder eine unterschiedliche Größe oder Ausdehnung aufweisen. Besonders vorteilhaft ist die Nutzung eines Stablichtleiters mit der Beziehung L • 10·H,B • 5·B,H.

Der Lichtleiter kann ein plattenförmiger oder scheibenförmiger Lichtleiter sein, dessen Höhe H und Breite B sich merklich unterscheiden, d.h., dass L > H > B oder L > B > H gilt. Höhe H und Breite B können sich z.B. mindestens um den Faktor 2, insbesondere mindestens um den Faktor 5, unterscheiden.

Für den Fall, dass die Höhe H und die Breite B des Lichtleiters unterschiedlich sind, werden die Längsseiten mit der größeren Ausdehnung auch als Flachseiten, die Längsseiten mit der geringeren Ausdehnung auch als Schmalseiten bezeichnet. Die Lichteinkopplungsfläche und Lichtumlenkfläche können an den Schmalseiten oder an den Flachseiten vorgesehen sein.

Es ist eine Weiterbildung, dass der Lichtleiter entlang seiner Längserstreckung einen rechteckigen Querschnitt aufweist, was eine besonders effektive und verlustarme Lichtabstrahlung sowie effektive Lichtablenkung ermöglicht. Jedoch ist der Querschnitt nicht darauf beschränkt und kann z.B. auch als zweiseitig abgeflachter Kreis, trapezförmig oder durch ein Freiformprofil definiert sein. Für den Fall, dass die Querschnittsform der eines zweiseitig abgeflachten Kreises entspricht, kann sie insbesondere auch als kreisförmige Form vorliegen, die zwei sich nicht schneidende geradlinige Kreisschnitte aufweist. Die Lichtumlenkfläche und die Lichtauskopplungsfläche befinden sich an den geradlinigen Kreisschnitten. Es ist eine Weiterbildung, dass die Kreisschnitte zueinander parallel angeordnet sind. Sie können die gleiche Länge oder eine unterschiedliche Länge aufweisen. Diese Querschnittsform kann auch so ausgedrückt werden, dass sie einer rechteckigen oder trapezartigen Grundform mit konvex gekrümmten Seitenrändern entspricht, wobei sich die Lichtumlenkfläche und die Lichtauskopplungsfläche an den geraden Seiten befinden.

Der Querschnitt kann entlang der Längslichtung des Lichtleiters in Größe und/oder Form konstant sein, ist aber nicht darauf beschränkt.

Der Lichtleiter kann sich in Längserstreckung zumindest teilweise geradlinig und/oder zumindest teilweise gekrümmt erstrecken.

Der Lichtleiter ist insbesondere ein transparenter Lichtleiter. Er kann z.B. aus Kunststoff oder aus Glas bestehen.

Die mindestens eine Lichtquelle kann beispielsweise mindestens eine LED umfassen. Das von der mindestens einen Lichtquelle in den Lichtleiter eingekoppelte Licht wird durch Reflexion, z.B. innere Totalreflexion, an den Seiten des Lichtleiters auf grundsätzlich bekannte Weise in dem Lichtleiter geführt.

Die Lichtumlenkbereiche dienen dazu, darauf einfallendes Licht unter einem solchen (typischerweise geringen oder steilen) Einfallswinkel auf die Lichtauskopplungsfläche lenken, dass das Licht dort nicht mehr zurück in den Lichtleiter reflektiert wird, sondern durch die Lichtauskopplungsfläche austritt bzw. ausgekoppelt wird.

Dass der Lichtauskopplungsfläche mindestens ein Lichtablenkprisma optisch nachgeschaltet ist, umfasst insbesondere, dass ein Teil des aus der Lichtauskopplungsfläche abgestrahlten Lichts folgend durch das mindestens eine Lichtablenkprisma läuft und dadurch abgelenkt wird. Das Lichtablenkprisma kann ein Umlenkprisma und/oder ein Ablenkprisma sein. Ein anderer Teil des aus der Lichtauskopplungsfläche abgestrahlten Lichts verläuft an dem mindestens einen Lichtablenkprisma vorbei und insbesondere direkt - und damit ungedämpft - auf den zu beleuchtenden Bereich ("Ausleuchtbereich") des Fahrzeuginterieurs. Insbesondere ist die gedanklich senkrecht auf die Lichtauskopplungsfläche des Lichtleiters projizierte Fläche des mindestens einen Lichtablenkprismas kleiner als die Größe der Lichtauskopplungsfläche, so dass ein Teil des aus der Lichtauskopplungsfläche abgestrahlten Lichts an dem mindestens einen Lichtablenkprisma vorbeilaufen kann.

Dass in einem Lichtpfad zwischen dem Lichtleiter und dem mindestens einen Lichtablenkprisma mindestens ein Sprung zwischen zwei Brechungsindizes auftritt, bewirkt eine besonders effektive Strahlumlenkung. Diese Bedingung kann auch so formuliert werden, dass zwischen dem Lichtleiter und dem mindestens einen Lichtablenkprisma mindestens eine Grenzfläche zwischen Stoffen unterschiedlicher Brechungsindizes vorhanden ist.

Für den Fall, dass die Fahrzeuginterieur-Beleuchtungsvorrichtung mehrere Lichtablenkprismen aufweist, ist es eine Ausgestaltung, dass die Lichtablenkprismen - insbesondere bei Blick senkrecht auf die Lichtauskopplungsfläche - voneinander separat an der Lichtauskopplungsfläche angeordnet sind. Dies ergibt den Vorteil, dass zwischen den Lichtablenkprismen aus dem Lichtleiter austretendes bzw. an den Lichtablenkprismen vorbeilaufendes Licht ungedämpft als Nutzlicht abstrahlbar ist. Diese Ausgestaltung umfasst insbesondere, dass zwei Lichtablenkprismen nicht als vorstehende Bereiche einer zusammenhängenden Materialschicht miteinander verbunden sind, in welchem Fall das zwischen den Lichtablenkprismen vorbeilaufende Licht noch durch den nicht vorstehenden Bereich der Materialschicht hindurchstrahlen und dadurch gedämpft und/oder gestreut würde, z.B. aufgrund von Fresnel-Verlusten und/oder Reflexionsverlusten.

Es ist eine Ausgestaltung, dass der Lichtleiter einen anderen Brechungsindex aufweist als das mindestens eine Lichtablenkprisma. So wird der Vorteil erreicht, dass eine besonders effektive Strahlablenkung durch das Prisma auch dann erreicht wird, wenn es praktisch unmittelbar (ggf. durch eine dünne, optisch praktisch nicht wirksame Haft- oder Klebeschicht getrennt) auf dem Lichtleiter aufliegt oder sogar einstückig mit dem Lichtleiter verbunden ist. Ein unterschiedlicher Brechungsindex kann z.B. durch unterschiedliche Materialien von Lichtleiter und Prisma bereitgestellt werden. Dabei können in einer Weiterbildung der Lichtleiter und das Prisma aus unterschiedlichem Kunststoff bestehen und in einer anderen Weiterbildung aus unterschiedlichem Glas bestehen. In noch einer anderen Weiterbildung besteht eine der Komponenten aus Glas, die andere aus Kunststoff usw. Auch können die Material-Paarungen von Lichtleiter und Prisma so ausgebildet sein, dass sie das gleiche oder unterschiedliches Grundmaterial aufweisen, wobei zumindest ein Material mit einem den Brechungsindex ändernden Zusatzstoff oder Beimischung versehen ist. Der Kunststoff kann z.B. PMMA oder PC sein.

Es ist eine Ausgestaltung, dass das mindestens eine Lichtablenkprisma ein von dem Lichtleiter separat hergestelltes Bauteil ist. Dies ermöglicht eine besonders robuste sowie präzise und einfach hergestellte Vorrichtung. Auch wird so eine Bereitstellung von Lichtleiter und Prismen mit unterschiedlichen Brechungsindizes erleichtert. Die Kontaktflächen von Lichtleiter und Prisma können dann unmittelbar (z.B. direkt oder nur durch eine dünne, optisch praktisch nicht wirksame Haft- bzw. Klebeschicht voneinander getrennt) aufeinander aufliegen.

Es ist eine Ausgestaltung, dass mindestens ein Lichtablenkprisma und der Lichtleiter ein einstückig hergestelltes Mehrkomponenten-Bauteil bilden, insbesondere ein Zweikomponenten-Bauteil, und der Bereich des Bauteils, der das mindestens eine Lichtablenkprisma darstellt, einen anderen Brechungsindex aufweist als der Bereich des Bauteils, der den Lichtleiter darstellt. So wird der Vorteil einer ganz besonders robusten sowie präzise und einfach hergestellten Vorrichtung erreicht. Ein solches Mehrkomponenten-Bauteil kann beispielsweise im Rahmen eines Mehrkomponenten-Spritzgussverfahrens hergestellt worden sein, z.B. Aus Kunststoff oder Glas.

Es ist eine Ausgestaltung, dass mindestens ein Lichtablenkprisma durch einen Spalt von dem Lichtleiter beabstandet ist. Dies ermöglicht eine effektive Lichtablenkung mittels eines Prismas auch dann, wenn die Materialien von Prisma und Lichtleiter gleich sind. Alternativ oder zusätzlich kann ein Lichtablenkeffekt verstärkt werden, wenn die Materialien unterschiedlich sind.

Es ist eine Ausgestaltung, dass der Spalt ein Luftspalt ist. Dieser ist besonders preiswert bereitstellbar. Eine Positionsfixierung eines Lichtablenkprismas gegenüber dem Lichtleiter kann dann z.B. über eine seitliche Befestigung erfolgen, z.B. als einstückig hergestelltes Bauteil (z.B. in Form eines Spritzgussbauteils) oder mittels einer eigenständigen Befestigungsvorrichtung.

Es ist eine Ausgestaltung, dass der Spalt ein mit einem festen Material gefüllter Spalt ist, dessen Brechungsindex sich von dem Brechungsindex zumindest des mindestens einen Lichtablenkprismas unterscheidet. So wird der Vorteil erreicht, dass eine besonders robuste und effektiv lichtablenkende Fahrzeuginterieur-Beleuchtungsvorrichtung bereitgestellt wird. Es ist zur effektiven Strahlumlenkung besonders vorteilhaft, wenn der Brechungsindex des Materials in dem Spalt sich von den Brechungsindizes des Lichtleiters und des mindestens einen Lichtablenkprismas unterscheidet. Die Brechungsindizes des Lichtleiters und des mindestens einen Lichtablenkprismas können gleich oder unterschiedlich sein.

Erfindungsgemäß ist das mindestens eine Lichtablenkprisma bei Betrachtung senkrecht zur Lichtauskopplungsfläche vollständig bzw. disjunkt zwischen den Lichtumlenkbereichen angeordnet. So kann vorteilhafterweise ein besonders hoher ungedämpfter, direkt aus dem Lichtleiter ausgekoppelter Nutzlichtanteil bereitgestellt werden.

Es ist eine Ausgestaltung mit mehreren in Längsrichtung des Lichtleiters zueinander beabstandeten Lichtablenkprismen, dass die Lichtablenkprismen bei Betrachtung senkrecht zur Lichtauskopplungsfläche jeweils zwischen zwei benachbarten Lichtumlenkbereichen angeordnet sind. Die Lichtablenkprismen überdecken also bei Betrachtung senkrecht zur Lichtauskopplungsfläche des Lichtleiters die zugehörigen Lichtumlenkbereiche nicht oder nicht vollständig. Sie überdecken in anderen Worten die Lichtumlenkbereiche nicht vollständig, d.h. nicht oder nur teilweise. Es bleibt in dieser Ausgestaltung also bei Betrachtung senkrecht zur Lichtauskopplungsfläche immer ein Bereich unterhalb jeder der Lichtauskopplungsflächen, der nicht durch die Lichtablenkprismen überdeckt wird.

Es ist eine Ausgestaltung, dass mindestens ein Lichtablenkprisma zumindest einseitig - insbesondere beidseitig - seitlich über die Lichtauskopplungsfläche des Lichtleiters übersteht, d.h., senkrecht zur Längsrichtung des Lichtleiters. Das mindestens ein Lichtablenkprisma kann dazu z.B. eine größere Breite aufweisen als der Lichtleiter. So wird der Vorteil erreicht, dass besonders viel Streulicht in den Nutzlichtbereich ablenkbar ist. Es ist eine Weiterbildung, dass eine Lichteintrittsfläche des mindestens einen Lichtablenkprismas parallel zu einem gegenüberlegenden Flächenbereich der Lichtauskopplungsfläche des Lichtleiters angeordnet ist.

Es ist eine Weiterbildung, dass der mindestens eine Lichtumlenkbereich jeweils kerbenförmig oder im Profilquerschnitt dreieckig ausgebildet ist. Der im Folgenden einfach als "Kerbe" bezeichnete Lichtumlenkbereich kann als Materialaussparung oder Rücksprung in die Lichtumlenkfläche eingebracht sein und/oder als von der Lichtumlenkfläche vorstehender Vorsprung ausgebildet sein. Die Kerbe kann im Querschnitt spitz oder abgerundet, symmetrisch oder asymmetrisch geformt sein. Die Kerbe kann eine oberflächlich durchgehende Kerbe sein. Bei Vorliegen mehrerer Kerben können benachbarte Kerben einen gleichen oder unterschiedlichen Abstand zueinander aufweisen, zumindest zwei Kerben eine gleiche oder unterschiedliche Größe aufweisen und/oder zumindest zwei Kerben eine gleiche oder unterschiedliche Form aufweisen.

Die Aufgabe wird auch gelöst durch ein Fahrzeug, aufweisend mindestens eine Fahrzeuginterieur-Beleuchtungsvorrichtung wie oben beschrieben. Das Fahrzeug kann analog zu der Fahrzeuginterieur-Beleuchtungsvorrichtung ausgebildet sein und ergibt die gleichen Vorteile.

Das Fahrzeug kann ein Kraftfahrzeug (z.B. ein Kraftwagen wie ein Personenkraftwagen, Lastkraftwagen, Bus usw.), eine Eisenbahn, ein Wasserfahrzeug (z.B. ein Boot oder ein Schiff) oder ein Luftfahrzeug (z.B. ein Flugzeug oder ein Hubschrauber) sein.

Es ist eine Ausgestaltung, dass mindestens eine Fahrzeuginterieur-Beleuchtungsvorrichtung zur Beleuchtung einer Tür eingerichtet ist und das mindestens eine Lichtablenkprisma so in Bezug auf den Lichtleiter angeordnet ist, dass es von der Lichtauskopplungsfläche in Richtung neben die Tür gerichtetes Licht auf die Tür umlenkt. Es ist eine Weiterbildung, dass die Fahrzeuginterieur-Beleuchtungsvorrichtung insbesondere eine Entblendung der C-Säule bewirkt.

### Kurze Figurenbeschreibung

Nachfolgend wird ein vorteilhaftes Ausführungsbeispiel der Erfindung unter Bezugnahme auf die begleitenden Figuren schematisch näher erläutert. Es zeigen:
- Figur 1: zeigt in Schrägansicht eine erfindungsgemäße Fahrzeuginterieur-Beleuchtungsvorrichtung;
- Figur 2: zeigt als Schnittdarstellung in Seitenansicht eine vereinfachende Skizze eines Ausschnitts der Fahrzeuginterieur-Beleuchtungsvorrichtung aus Figur 1; und
- Figur 3: zeigt als Schnittdarstellung in Frontansicht einen Ausschnitt aus einem Fahrzeug mit der Fahrzeuginterieur-Beleuchtungsvorrichtung aus Figur 1.

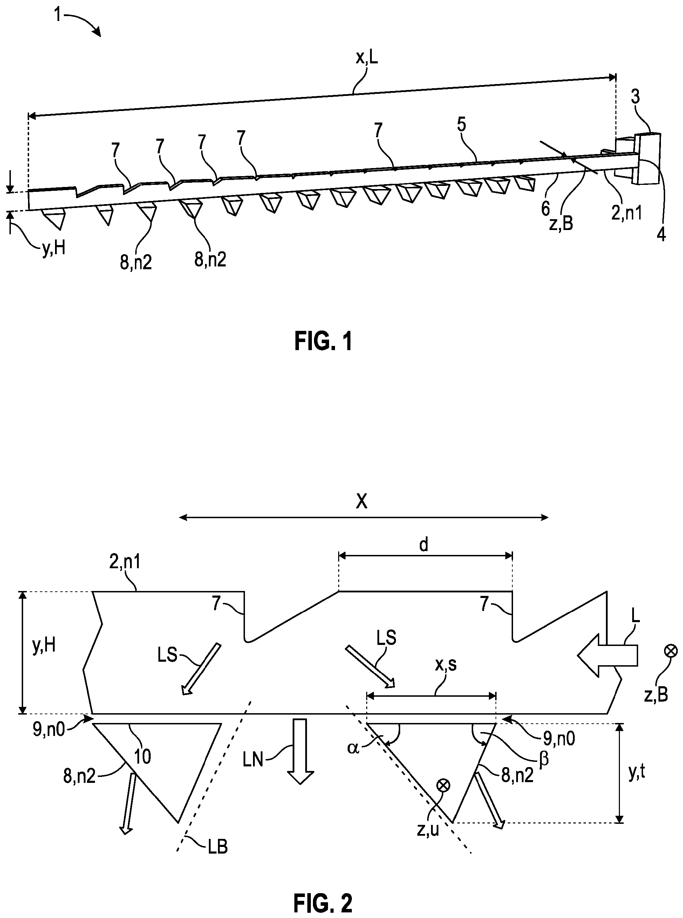

**Figur 1** zeigt in Schrägansicht eine Fahrzeuginterieur-Beleuchtungsvorrichtung 1, die einen länglichen Lichtleiter 2 aus einem transparentem Material mit einem Brechungsindex n1 aufweist, z.B. aus Kunststoff wie PC oder PMMA.

Der Lichtleiter 2 ist als ein sich entlang seiner Längsrichtung x geradlinig erstreckender Profilkörper mit Länge L und mit einer rechteckigen, konstanten Querschnittsform ausgebildet. In der senkrecht zur Längsrichtung x stehenden Höhenrichtung y weist er eine Höhe H auf, in der senkrecht zur Längsrichtung x und zur Höhenrichtung y stehenden Breitenrichtung z eine Breite B, wobei L >> H und L >> B gilt, insbesondere L • 10·H und L • 10·B. Der Lichtleiter 2 kann somit auch als ein Stablichtleiter bezeichnet werden. Vorliegend gilt ferner rein beispielhaft H > B, insbesondere H • 2·B, speziell H • 5·B. Der Lichtleiter 2 ist also merklich höher als breit.

Die Fahrzeuginterieur-Beleuchtungsvorrichtung 1 weist ferner mindestens eine Lichtquelle 3, z.B. in Form mindestens einer LED, auf, deren Licht in eine der beiden Stirnseiten einkoppelbar ist. Diese Stirnseite stellt somit eine stirnseitige Lichteinkopplungsfläche 4 bereit oder dar. Die zueinander parallelen Schmalseiten des Lichtleiters 2 mit den Flächen L·B stellen eine längsseitige Lichtumlenkfläche 5 bzw. eine längsseitige Lichtauskopplungsfläche 6 bereit oder dar und liegen sich somit gegenüber. Von der Lichtquelle 3 durch die Lichteinkopplungsfläche 4 in den Lichtleiter 2 eingestrahltes Licht wird in diesem auf grundsätzlich bekannte Weise z.B. durch Totalreflexion geleitet.

An der Lichtumlenkfläche 5 sind mehrere entlang der Längsrichtung x in Reihe angeordnete, zueinander beabstandete Lichtumlenkbereiche in Form von Kerben 7 eingebracht. Die Kerben 7 weisen hier beispielhaft eine in Abhängigkeit von der Lichteinkopplungsfläche 4 unterschiedliche Größe und Form auf, um eine über die Längsrichtung x gleichmäßige Auskopplung von Nutzlicht zu erreichen. Auch kann sich eine Form der Kerben ändern. Alle Kerben 7 sind hier beispielhaft in Breitenrichtung z durchgängig ausgebildet.

Trifft in dem Lichtleiter 2 geleitetes Licht auf eine der Kerben 7, wird es von dieser so auf die Lichtauskopplungsfläche 6 umgeleitet, dass der dortige Auftreffwinkel eine Auskopplung aus der Lichtauskopplungsfläche 6 erlaubt.

Optisch hinter der Lichtauskopplungsfläche 6 und beabstandet davon sind mehrere in Längsrichtung x in Reihe angeordnete Lichtablenkprismen 8 der Lichtauskopplungsfläche 6 gegenüberliegend angeordnet. Die Lichtablenkprismen 8 sind die voneinander separat an der Lichtauskopplungsfläche angeordnet und gegenüber der Lichtauskopplungsfläche 6 z.B. nicht über eine gemeinsame Trägerfolie o.ä. miteinander verbunden. Sie können jedoch außerhalb eines Lichtpfads miteinander verbunden sein, beispielsweise in Form eines einzigen, ggf. einstückig hergestellten Bauteils. Die Lichtablenkprismen 8 sind als sich in Breitenrichtung z geradlinig erstreckende Profilkörper mit jeweils insbesondere konstanter Größe und/oder Form des Querschnitts ausgebildet, aber allgemein nicht darauf beschränkt. Der Querschnitt ist hier beispielhaft ein dreieckiger Querschnitt.

Die Lichtablenkprismen 8 sind insbesondere separat von dem Lichtleiter 2 hergestellt worden. Sie können im Vergleich zu dem Lichtleiter 2 aus einem Material mit einem Brechungsindex n2 bestehen, der zu dem Brechungsindex n1 des Lichtleiters n2 gleich oder unterschiedlich ist, z.B. aus Kunststoff oder Glas. Die Lichtablenkprismen 8 weisen hier beispielhaft eine in Abhängigkeit von der Lichteinkopplungsfläche 4 unterschiedliche Größe, Form und/oder Ausrichtung auf.

**Figur 2** zeigt als Schnittdarstellung in Seitenansicht eine vereinfachende Skizze eines Ausschnitts der Fahrzeuginterieur-Beleuchtungsvorrichtung 1 im Bereich eines Längsabschnitts des Lichtleiters 2 mit zwei gleichen Kerben 7 und zwei gleichen Lichtablenkprismen 8. Die Lichtablenkprismen 8 weisen eine Länge s, eine Höhe t und eine Breite u auf.

Insbesondere ragen die Lichtablenkprismen 8 beidseitig seitlich (d.h. hier: in Breitenrichtung z) über die Lichtauskopplungsfläche 6 des Lichtleiters 2 hinaus bzw. dort stehen über. Es gilt also u > B. Dadurch wird vorteilhafterweise eine besonders zuverlässige Entblendung erreicht.

Die Kerben 7 sind in Längserstreckung bzw. Längsrichtung x mit einem Kanten-zu-Kanten-Abstand d voneinander beabstandet. Dieser kann variieren, z.B. mit Abstand von der Lichteinkopplungsfläche 4. Die Lichtablenkprismen 8 sind bei Betrachtung senkrecht zur Lichtauskopplungsfläche 6 oder in Bezug auf ihre Position entlang der Längsrichtung x zwischen den Kerben 7 angeordnet.

Die Lichtablenkprismen 8 sind ferner durch eine jeweiligen Luftspalt 9 von dem Lichtleiter 2 beabstandet an diesem angeordnet. Dadurch tritt in einem jeweiligen Lichtpfad zwischen dem Lichtleiter 2 und den Lichtablenkprismen 8 mindestens ein Sprung zwischen zwei Brechungsindizes auf, nämlich hier an der Lichtauskopplungsfläche 6 des Lichtleiters 2 zum Luftspalt 9 und an der Lichteintrittsfläche 10 des jeweiligen Lichtablenkprismas 10. Dabei wird davon ausgegangen, dass sich die Brechungsindizes n1 und n2 von dem Brechungsindex n0 von Luft unterscheiden, insbesondere größer sind.

Das von den Kerben 7 umgelenkte Licht L wird vorwiegend in einem Bereich gegenüberliegend zu den Kerben 7 aus der Lichtauskopplungsfläche 6 ausgekoppelt, und zwar als Nutzlicht LN, das zwischen den Lichtablenkprismen 8 durchläuft, ohne von diesen beeinflusst zu werden. Dieser Nutzlichtbereich NB entspricht hier in etwa einem Raumwinkelbereich von ca. ± 50° zur Senkrechten der Lichtauskopplungsfläche 6.

Jedoch treffen ausgehend von den Kerben 7 auch ("Streulicht"-)Anteile LS des Lichts L unter einem so flachen Winkel auf die Lichtauskopplungsfläche 6, dass sie danach auf die Lichtablenkprismen 8 treffen und von diesen zumindest teilweise in den Nutzlichtbereich NB umgelenkt werden. Dies ist besonders vorteilhaft, da so nicht nur störendes, insbesondere potenziell blendendes Streulicht LS vermieden wird, sondern auch dazu verwendet wird, das Nutzlicht LN zu verstärken.

Die Lichtablenkprismen 8 sind hier zur besonders effektiven Lichtumlenkung sowie zur Erreichung einer hohen Lichtausbeute vorteilhafterweise so geformt und angeordnet, dass für sie mindestens eine der folgenden Bedingungen erfüllt ist:
- Die Lichteintrittsfläche 10 liegt parallel bzw. tangential zu dem gegenüberliegenden Bereich der Lichtauskopplungsfläche 6;
- Die Länge s eines Lichtablenkprismas 8 ist geringer als der Abstand d zweier benachbarter Kerben 7, insbesondere zweier schräg gegenüberliegender benachbarter Kerben 7;
- Die Winkel • und • der Lichteintrittsfläche 10 zu den anderen Flächen des Lichtablenkprismas 8 sind jeweils kleiner 90°;
- Die Höhe der Lichtablenkprismen 8 liegt zwischen 1 mm und 10 mm.

Mindestens eine solche Bedingung kann auch allgemein als vorteilhaft angesehen werden. Die Winkel • und • können eine gleiche oder eine unterschiedliche Größe aufweisen.

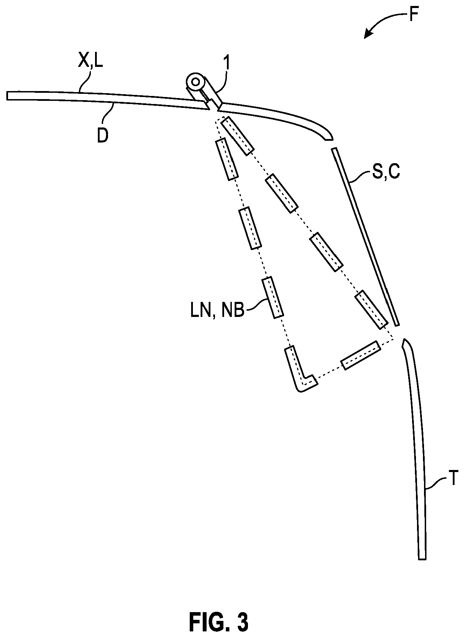

**Figur 3** zeigt als Schnittdarstellung in Frontansicht einen Ausschnitt aus einem Fahrzeug F mit mindestens einer Fahrzeuginterieur-Beleuchtungsvorrichtung 1 zur Beleuchtung einer Tür T des Fahrzeugs F. Die Fahrzeuginterieur-Beleuchtungsvorrichtung 1 ist in einem Gehäuse im Bereich eines Dachhimmels D untergebracht. Der zugehörige oder Nutzlichtbereich NB ist auf eine Innenseite der Tür T unterhalb einer Türscheibe S als dem Ausleuchtbereich gerichtet.

Die Lichtablenkprismen 8 sind so in Bezug auf den Lichtleiter 2 angeordnet, dass sie von der Lichtauskopplungsfläche 6 in Richtung neben die Tür T - z.B. in Richtung einer, hier hinter einer Türscheibe S befindlichen C-Säule C - gerichtetes Streulicht LS auf die Tür T umlenken. So wird der Vorteil erreicht, dass ein Fahrzeuginsasse nicht von der Fahrzeuginterieur-Beleuchtungsvorrichtung 1 geblendet wird, wenn er seinen Kopf zur Entspannung an die C-Säule C lehnt. Es hat sich experimentell gezeigt, dass ansonsten auf die C-Säule C einfallendes störendes Streulicht LS durch Vorsehen von Lichtablenkprismen 8 in Bezug auf seine Intensität um 90% bis 95% verringert werden kann.

Grundsätzlich können zur Ausleuchtung eines Bereichs eines Fahrzeuginterieurs oder Innenraums ein oder mehrere Fahrzeuginterieur-Beleuchtungsvorrichtungen 1 verwendet werden.

Die Figuren sind lediglich schematische Darstellungen und dienen nur der Erläuterung der Erfindung. Gleiche oder gleichwirkende Elemente sind durchgängig mit den gleichen Bezugszeichen versehen.

Obwohl in Figur 1 und Figur 2 die Fahrzeuginterieur-Beleuchtungsvorrichtung 1 anhand von Lichtablenkprismen 8 mit einem dreieckigen Querschnitt beschrieben worden ist, kann die Querschnittsform davon allgemein auch abweichen, z.B. trapezförmig sein. Die obigen vorteilhaften Bedingungen für die Lichtablenkprismen 8 mit dreieckigem Querschnitt können dann z.B. auch für Lichtablenkprismen mit trapezförmigem Querschnitt gelten.

Der Einsatz der Fahrzeuginterieur-Beleuchtungsvorrichtung ist nicht auf die untersuchte Türbeleuchtung beschränkt, sondern kann für alle möglichen Beleuchtungsaufgaben, insbesondere für indirekte Beleuchtungsaufgaben, im Fahrzeuginnenraum verwendet werden.

Allgemein können die Abstrahlrichtung und der Öffnungswinkel des Nutzlichtbereichs durch geeignete Wahl von Zahl, Anordnung, Form und Größe der Lichtablenkprismen an einen gewünschten Anwendungszweck angepasst werden, und zwar für unterschiedliche Anwendungszwecke ggf. auch unter Nutzung der gleichen Kombination von Lichtquelle und Lichtleiter, was eine besonders flexible und kostengünstige Ausgestaltung der Fahrzeuginterieur-Beleuchtungsvorrichtung ermöglicht.

### BEZUGSZEICHENLISTE

- 1: Fahrzeuginterieur-Beleuchtungsvorrichtung
- 2: Lichtleiter
- 3: Lichtquelle
- 4: Lichteinkopplungsfläche
- 5: Lichtumlenkfläche
- 6: Lichtauskopplungsfläche
- 7: Kerbe
- 8: Lichtablenkprisma
- 9: Luftspalt
- 10: Lichteintrittsfläche des Lichtablenkprismas
- B: Breite des Lichtleiters
- C: C-Säule
- D: Dachhimmel
- d: Abstand
- F: Fahrzeug
- H: Höhe des Lichtleiters
- L: Länge des Lichtleiters
- LN: Nutzlicht
- LS: Streulicht
- NB: Nutzlichtbereich
- n0: Brechungsindex von Luft
- n1: Brechungsindex des Lichtleiters
- n2: Brechungsindex des Lichtablenkprismas
- S: Türscheibe
- s: Länge des Lichtablenkprismas
- T: Fahrzeugtür
- t: Höhe des Lichtablenkprismas
- u: Breite des Lichtablenkprismas
- x: Längsrichtung
- y: Höhenrichtung
- z: Breitenrichtung
- •: Winkel
- •: Winkel

## Patentansprüche

1. Fahrzeuginterieur-Beleuchtungsvorrichtung (1), aufweisend
- einen länglichen Lichtleiter (2) mit mindestens einer stirnseitigen Lichteinkopplungsfläche (4), einer längsseitigen Lichtumlenkfläche (5) und einer der Lichtumlenkfläche (5) gegenüberliegenden längsseitigen Lichtauskopplungsfläche (6), wobei an der Lichtumlenkfläche (5) mehrere in Längsrichtung (x) des Lichtleiters (2) zueinander beabstandete Lichtumlenkbereiche (7) vorhanden sind, sowie
- mindestens eine Lichtquelle (3), deren Licht (L) an der mindestens einen Lichteinkopplungsfläche (4) in den Lichtleiter (2) einkoppelbar ist und mittels Lichtumlenkung an der Lichtumlenkfläche (5) an der Lichtauskopplungsfläche (6) aus dem Lichtleiter (2) auskoppelbar ist,
wobei
- der Lichtauskopplungsfläche (6) mindestens ein Lichtablenkprisma (8) optisch nachgeschaltet ist,
- in einem Lichtpfad zwischen dem Lichtleiter (2) und dem mindestens einen Lichtablenkprisma (8) mindestens ein Sprung zwischen zwei Brechungsindizes (n0, n1, n2) auftritt und
- das mindestens eine Lichtablenkprisma (8) bei Betrachtung senkrecht zur Lichtauskopplungsfläche (6) zwischen zwei benachbarten Lichtumlenkbereichen (7) angeordnet ist, **dadurch gekennzeichnet,**
**dass** das mindestens eine Lichtablenkprisma (8) bei Betrachtung senkrecht zur Lichtauskopplungsfläche (6) vollständig zwischen den Lichtumlenkbereichen (7) angeordnet ist.

2. Fahrzeuginterieur-Beleuchtungsvorrichtung (1) nach Anspruch 1 mit mehreren Lichtablenkprismen (8), die voneinander separat an der Lichtauskopplungsfläche (6) angeordnet sind.

3. Fahrzeuginterieur-Beleuchtungsvorrichtung (1) nach einem der vorhergehenden Ansprüche, wobei der Lichtleiter (2) einen anderen Brechungsindex (n1) aufweist als das mindestens eine Lichtablenkprisma (8).

4. Fahrzeuginterieur-Beleuchtungsvorrichtung (1) nach einem der vorhergehenden Ansprüche, wobei mindestens ein Lichtablenkprisma (8) ein von dem Lichtleiter (2) separat hergestelltes Bauteil ist, einen anderen Brechungsindex (n2) aufweist als der Lichtleiter (2) und unmittelbar auf dem Lichtleiter (2) aufliegt.

5. Fahrzeuginterieur-Beleuchtungsvorrichtung (1) nach einem der vorhergehenden Ansprüche, wobei mindestens ein Lichtablenkprisma (8) und der Lichtleiter (2) ein einstückig hergestelltes Mehrkomponenten-Bauteil bilden und das mindestens eine Lichtablenkprisma (8) einen anderen Brechungsindex (n2) aufweist als der Lichtleiter (2).

6. Fahrzeuginterieur-Beleuchtungsvorrichtung (1) nach einem der vorhergehenden Ansprüche, wobei mindestens ein Lichtablenkprisma (8) durch einen Spalt (9) von dem Lichtleiter (2) beabstandet ist.

7. Fahrzeuginterieur-Beleuchtungsvorrichtung (1) nach Anspruch 6, wobei der Spalt (9) ein Luftspalt ist.

8. Fahrzeuginterieur-Beleuchtungsvorrichtung (1) nach Anspruch 6, wobei der Spalt (9) ein mit einem festen Material gefüllter Spalt (9) ist, dessen Brechungsindex sich von einem Brechungsindex (n2) zumindest des mindestens einen Lichtablenkprismas unterscheidet.

9. Fahrzeuginterieur-Beleuchtungsvorrichtung (1) nach einem der vorhergehenden Ansprüche mit mehreren in Längsrichtung (x) des Lichtleiters (2) zueinander beabstandeten Lichtablenkprismen (8), wobei die Lichtablenkprismen (8) bei Betrachtung senkrecht zur Lichtauskopplungsfläche (6) jeweils zwischen zwei benachbarten Lichtumlenkbereichen (7) angeordnet sind.

10. Fahrzeuginterieur-Beleuchtungsvorrichtung (1) nach einem der vorhergehenden Ansprüche, wobei mindestens ein Lichtablenkprisma (8) zumindest einseitig seitlich über die Lichtauskopplungsfläche (6) des Lichtleiters (2) übersteht.

11. Fahrzeug (F), aufweisend mindestens eine Fahrzeuginterieur-Beleuchtungsvorrichtung (1) nach einem der vorhergehenden Ansprüche.

12. Fahrzeug nach Anspruch 11, wobei mindestens eine Fahrzeuginterieur-Beleuchtungsvorrichtung (1) zur Beleuchtung einer Tür (T) eingerichtet ist und das mindestens eine Lichtablenkprisma (8) so in Bezug auf den Lichtleiter (2) angeordnet ist, dass es von der Lichtauskopplungsfläche (6) in Richtung neben einen Nutzlichtbereich (NB), insbesondere neben eine Tür (T), gerichtetes Licht (LS) auf den Nutzlichtbereich (NB) umlenkt.

## Claims

1. Vehicle interior lighting device (1), comprising
• an elongated light guide (2) with at least one front-side light coupling-in surface (4), a longitudinal light deflection surface (5), and a longitudinal light decoupling surface (6) opposite the light deflection surface (5), wherein several light deflection regions (7) spaced apart from one another in the longitudinal direction (x) of the light guide (2) are present on the light deflection surface (5), and
• at least one light source (3), the light (L) of which can be coupled into the light guide (2) at the at least one light coupling-in surface (4) and can be decoupled from the light guide (2) at the light decoupling surface (6) by means of light deflection at the light deflection surface (5),
wherein
• at least one light deflection prism (8) is optically arranged downstream of the light decoupling surface (6),
• at least one jump between two refractive indices (n0, n1, n2) occurs in a light path between the light guide (2) and the at least one light deflection prism (8), and
• the at least one light deflection prism (8) is arranged, when viewed perpendicular to the light decoupling surface (6), between two adjacent light deflection regions (7), **characterized in that**
the at least one light deflection prism (8) is arranged, when viewed perpendicular to the light decoupling surface (6), completely between the light deflection regions (7).

2. Vehicle interior lighting device (1) according to claim 1 with several light deflection prisms (8), which are arranged separately from one another on the light decoupling surface (6).

3. Vehicle interior lighting device (1) according to one of the preceding claims, wherein the light guide (2) has a different refractive index (n1) than the at least one light deflection prism (8).

4. Vehicle interior lighting device (1) according to one of the preceding claims, wherein at least one light deflection prism (8) is a component manufactured separately from the light guide (2), has a different refractive index (n2) than the light guide (2), and rests directly on the light guide (2).

5. Vehicle interior lighting device (1) according to one of the preceding claims, wherein at least one light deflection prism (8) and the light guide (2) form a one-piece multicomponent component, and the at least one light deflection prism (8) has a different refractive index (n2) than the light guide (2).

6. Vehicle interior lighting device (1) according to one of the preceding claims, wherein at least one light deflection prism (8) is spaced apart from the light guide (2) by a gap (9).

7. Vehicle interior lighting device (1) according to claim 6, wherein the gap (9) is an air gap.

8. Vehicle interior lighting device (1) according to claim 6, wherein the gap (9) is a gap (9) filled with a solid material, the refractive index of which differs from a refractive index (n2) of at least the at least one light deflection prism.

9. Vehicle interior lighting device (1) according to one of the preceding claims with several light deflection prisms (8) spaced apart from one another in the longitudinal direction (x) of the light guide (2), wherein the light deflection prisms (8) are arranged, when viewed perpendicular to the light decoupling surface (6), in each case between two adjacent light deflection regions (7).

10. Vehicle interior lighting device (1) according to one of the preceding claims, wherein at least one light deflection prism (8) projects laterally at least on one side beyond the light decoupling surface (6) of the light guide (2).

11. Vehicle (F), comprising at least one vehicle interior lighting device (1) according to one of the preceding claims.

12. Vehicle according to claim 11, wherein at least one vehicle interior lighting device (1) is configured for illuminating a door (T), and the at least one light deflection prism (8) is arranged relative to the light guide (2) such that it deflects light (LS) directed from the light decoupling surface (6) toward a region next to a useful light region (NB), in particular next to a door (T), onto the useful light region (NB).

## Revendications

1. Dispositif d'éclairage d'intérieur de véhicule (1), comprenant
• un guide de lumière allongé (2) avec au moins une surface frontale d'introduction de lumière (4), une surface longitudinale de déviation de lumière (5) et une surface longitudinale d'extraction de lumière (6) opposée à la surface de déviation de lumière (5), plusieurs zones de déviation de lumière (7) espacées les unes des autres dans la direction longitudinale (x) du guide de lumière (2) étant présentes sur la surface de déviation de lumière (5), ainsi que
• au moins une source lumineuse (3), dont la lumière (L) peut être introduite dans le guide de lumière (2) via la ou les surface(s) d'introduction de lumière (4) et peut être extraite du guide de lumière (2) au niveau de la surface d'extraction de lumière (6) au moyen d'une déviation de lumière sur la surface de déviation de lumière (5),
le dispositif étant **caractérisé en ce que**
• au moins un prisme de déviation de lumière (8) est disposé optiquement en aval de la surface d'extraction de lumière (6),
• au moins un saut entre deux indices de réfraction (n0, n1, n2) apparaît dans un trajet lumineux entre le guide de lumière (2) et le ou les prisme(s) de déviation de lumière (8), et
• le ou les prisme(s) de déviation de lumière (8) est/sont disposé(s), lorsqu'on observe perpendiculairement à la surface d'extraction de lumière (6), entre deux zones adjacentes de déviation de lumière (7), **caractérisé en ce que**
le ou les prisme(s) de déviation de lumière (8) est/sont disposé(s), lorsqu'on observe perpendiculairement à la surface d'extraction de lumière (6), entièrement entre les zones de déviation de lumière (7).

2. Dispositif d'éclairage d'intérieur de véhicule (1) selon la revendication 1, comprenant plusieurs prismes de déviation de lumière (8) qui sont disposés séparément les uns des autres sur la surface d'extraction de lumière (6).

3. Dispositif d'éclairage d'intérieur de véhicule (1) selon l'une des revendications précédentes, dans lequel le guide de lumière (2) présente un indice de réfraction (n1) différent de celui du ou des prisme(s) de déviation de lumière (8).

4. Dispositif d'éclairage d'intérieur de véhicule (1) selon l'une des revendications précédentes, dans lequel au moins un prisme de déviation de lumière (8) est un composant fabriqué séparément du guide de lumière (2), présente un indice de réfraction (n2) différent de celui du guide de lumière (2) et repose directement sur le guide de lumière (2).

5. Dispositif d'éclairage d'intérieur de véhicule (1) selon l'une des revendications précédentes, dans lequel au moins un prisme de déviation de lumière (8) et le guide de lumière (2) forment une pièce monobloc à plusieurs composants, et dans lequel le ou les prisme(s) de déviation de lumière (8) présente(nt) un indice de réfraction (n2) différent de celui du guide de lumière (2).

6. Dispositif d'éclairage d'intérieur de véhicule (1) selon l'une des revendications précédentes, dans lequel au moins un prisme de déviation de lumière (8) est écarté du guide de lumière (2) par un espace (9).

7. Dispositif d'éclairage d'intérieur de véhicule (1) selon la revendication 6, dans lequel l'espace (9) est un espace d'air.

8. Dispositif d'éclairage d'intérieur de véhicule (1) selon la revendication 6, dans lequel l'espace (9) est un espace rempli d'un matériau solide, dont l'indice de réfraction diffère de l'indice de réfraction (n2) d'au moins le ou les prisme(s) de déviation de lumière.

9. Dispositif d'éclairage d'intérieur de véhicule (1) selon l'une des revendications précédentes, comprenant plusieurs prismes de déviation de lumière (8) espacés les uns des autres dans la direction longitudinale (x) du guide de lumière (2), les prismes de déviation de lumière (8) étant disposés, lorsqu'on observe perpendiculairement à la surface d'extraction de lumière (6), respectivement entre deux zones adjacentes de déviation de lumière (7).

10. Dispositif d'éclairage d'intérieur de véhicule (1) selon l'une des revendications précédentes, dans lequel au moins un prisme de déviation de lumière (8) dépasse latéralement, au moins d'un côté, la surface d'extraction de lumière (6) du guide de lumière (2).

11. Véhicule (F), comprenant au moins un dispositif d'éclairage d'intérieur de véhicule (1) selon l'une des revendications précédentes.

12. Véhicule selon la revendication 11, dans lequel au moins un dispositif d'éclairage d'intérieur de véhicule (1) est conçu pour éclairer une porte (T), et dans lequel le ou les prisme(s) de déviation de lumière (8) est/sont disposé(s) par rapport au guide de lumière (2) de telle sorte qu'il(s) dévie(nt) vers la zone utile (NB) une lumière (LS) dirigée depuis la surface d'extraction de lumière (6) vers une région située à côté d'une zone utile (NB), en particulier à côté d'une porte (T).
